# EUROPÄISCHE PATENTANMELDUNG

(11) **EP 1 289 316 A2**
(43) Veröffentlichungstag der Anmeldung: **05.03.2003**
(21) Anmeldenummer: 02013780.8
(22) Anmeldetag: 21.06.2002
(51) Int. Cl.: H04N 13/00

(54) **Umfelderkennungssystem**

(30) Priorität: 23.08.2001 DE 10141220
(71) Anmelder: Valeo Schalter und Sensoren GmbH, 74321 Bietigheim-Bissingen (DE)
(72) Erfinder: Diessner, Daniel, Davisburg, MI, 48350 (US)
(74) Vertreter: Dreiss, Fuhlendorf, Steimle & Becker

(57) **Zusammenfassung**

Die Erfindung betrifft ein Umfelderkennungssystem zur dreidimensionalen Erkennung des Umfeldes eines Fahrzeuges, mit einem eine Objektebene aufzeichnenden Bildaufnehmer, mit einem zwischen dem Bildaufnehmer und der Objektebene angeordneten optischen System, wobei der Bildaufnehmer über das optische System die Objektebene von wenigstens zwei unterschiedlichen Positionen aus erfasst, und mit einem die erfassten Bilddaten verabreitenden und auswertenden Computersystem.

## Beschreibung

Die Erfindung betrifft ein Umfelderkennungssystem zur dreidimensionalen Erkennung des Umfeldes eines Fahrzeuges. Die dreidimensionale Erkennung des Umfeldes von Fahrzeugen kann insbesondere im Bereich der Fahrzeugkollisionserkennung, der Stabilisierung von Fahreigenschaften und der automatischen Fahrzeugführung von Bedeutung sein. Außerdem kann es zur Hilfe beim Rangieren auf engen Räumen und als Einparkhilfe Verwendung finden.

Bekannte Systeme weisen hierbei mindestens zwei Bildaufnehmer auf, die das zu erkennende Umfeld, nämlich die Objektebene, von zwei unterschiedlichen Positionen aus erkennen bzw. erfassen. Die beiden unabhängig voneinander erstellten Bilddatensätze der Objektebene werden dann in einem gemeinsamen Computersystem auf stereoskopischer Basis verarbeitet und ausgewertet.

Nachteil eines derartigen Systems ist, dass zwei Bildaufnehmer bereitzustellen sind, die in Anschaffung und Unterhalt aufwändig und teuer sind.

Der vorliegenden Erfindung liegt deshalb die Aufgabe zugrunde, ein Umfelderkennungssystem bereitzustellen, dass kostengünstig ist und dennoch hoch präzise arbeitet.

Diese Aufgabe wird durch ein Umfelderkennungssystem mit einem eine Objektebene aufzeichnenden Bildaufnehmer, mit einem zwischen dem Bildaufnehmer und der Objektebene angeordneten optischen System, wobei der Bildaufnehmer über das optische System die Objektebene von wenigstens zwei unterschiedlichen Positionen aus erfasst, und mit einem die erfassten Bilddaten verarbeitenden und auswertenden Computersystem gelöst.

Im Gegensatz zu dem bekannten Stand der Technik weist das erfindungsgemäße Umfelderkennungssystem lediglich einen Bildaufnehmer, beispielsweise eine digitale Kamera, auf. Um dennoch die Objektebene von zwei unterschiedlichen Positionen aus erfassen zu können, ist das optische System dem Bildaufnehmer vorgeschaltet. Das optische System erfasst die abzubildende Objektebene von zwei unterschiedlichen Positionen, die beispielsweise wenige Zentimeter voneinander entfernt angeordnet sein können. Das optische System leitet ferner die erfassten Bilddatensätze dem einen Bildaufnehmer zu, der diese aufzeichnet und dem Computersystem zur weiteren Verarbeitung und Auswertung zur Verfügung stellt.

Vorteilhafterweise weist der Bildaufnehmer zwei nebeneinander angeordnete Aufnahmeabschnitte auf, wobei der eine Aufnahmeabschnitt zur Erfassung der Objektebene aus der einen Position und der andere Aufnahmebschnitt zur Erfassung der Objektebene aus der anderen Position dient. Ein an für sich bekannter Bildaufnehmer wird also in zwei Aufnahmeabschnitte geteilt, die jeweils die Bilddatensätze aus der jeweiligen Position des optischen Systems erfassen.

Andererseits kann erfindungsgemäß auch vorgesehen sein, dass der Bildaufnehmer zwei wenigstens teilweise übereinander liegende Aufnahmeabschnitte aufweist, wobei der eine Aufnahmeabschnitt zur Erfassung der Objektebene aus der einen Position und der andere Aufnahmeabschnitt zur Erfassung der Objektebene aus der anderen Position dient. Dies hat den Vorteil, dass der Bildaufnehmer als solcher kleinere Dimensionen aufweisen kann; über das Computersystem können die Bilddatensätze aus der jeweiligen Aufnahmeposition getrennt und entsprechend verarbeitet und ausgewertet werden.

Vorteilhafterweise kann erfindungsgemäß vorgesehen sein, dass eine digitale Kamera den Bildaufnehmer aufweist. Derartige Kameras sind in vielfältiger Art und Weise bekannt und eignen sich für die Verwendung des erfindungsgemäßen Umfelderkennungssystems.

Das optische System ist vorteilhafterweise als Linsen-, Prismen-, Spiegel- und/oder Lichtleitersystem ausgebildet. Insbesondere hat sich ein Prismensystem als besonders vorteilhaft herausgestellt, da Prismen prinzipiell bessere Reflexionseigenschaften als beispielsweise Spiegel aufweisen. Prismen ermöglichen eine Totalreflexion, d.h. es treten keine Einbußen hinsichtlich der Lichtstärke auf.

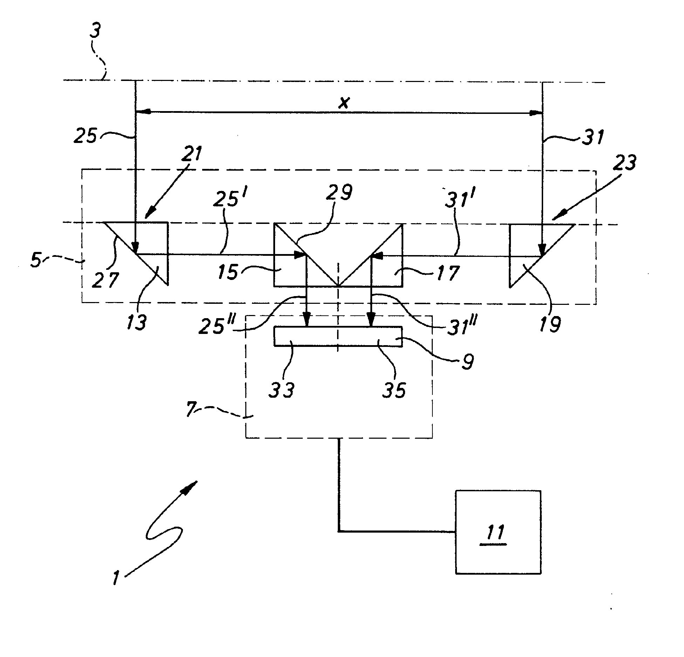

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Die Figur zeigt ein erfindungsgemäßes Umfelderkennungssystem 1 zur dreidimensionalen Erkennung des Umfeldes eines Fahrzeuges. Das Umfelderkennungssystem 1 erfasst eine Objektebene 3 auf stereoskopischer Basis. Dazu ist ein optisches System 5 unmittelbar einer Digitalkamera 7 mit einem Bildaufnehmer 9 vorgeschaltet. Die Digitalkamera 7 ist ihrerseits mit einem Computersystem 11 verbunden.

Das optische System ist als Prismensystem ausgebildet und weist in der gezeigten Ausführungsform insgesamt vier Prismen 13, 15, 17, und 19 auf. Die beiden Prismen 13 und 19 erfassen hierbei die Objektebene 3 von zwei unterschiedlichen Positionen 21 und 23, die zueinander einen Abstand x aufweisen. Die in der Position 21 von der Objektebene 3 kommenden Strahlengänge 25 werden an der Prismenfläche 27 in einem Winkel von 90° total reflektiert und treffen auf das Prisma 15. Die vom Prisma 13 reflektierten Strahlengänge 25' werden, wie dargestellt, an der Prismenfläche 29 des Prismas 15 nochmals um 90° total reflektiert und treffen letztendlich als Strahlengänge 25' ' auf den Bildaufnehmer 9.

Entsprechend werden die von der Bildebene 3 kommenden Strahlengänge 31 in der Position 23 von dem Prisma 19 und dem Prisma 17 jeweils um 90° total reflektiert. Die reflektierten Strahlengänge 31' ' treffen ebenfalls auf den Bildaufnehmer 9.

Der Bildaufnehmer 9 unterteilt sich in zwei Aufnahmeabschnitte 33 und 35, wobei auf den Abschnitt 33 die Strahlengänge 25' ' und auf den Abschnitt 35 die Strahlengänge 31' ' treffen.

Die Verwendung von Prismen 13, 15, 17, 19 hat den Vorteil, dass aufgrund der Totalreflexion keine Einbußen hinsichtlich der Lichtstärke und damit der Bildqualität auftreten.

Die von den beiden Aufnahmeabschnitten 33 und 35 erfassten Strahlengänge 25' ' und 31' ' werden dem Computersystem 11 zugeführt, das die erfassten Bilddatensätze verarbeitet und entsprechend auswertet. Aufgrund der Bilddatensätze kann eine dreidimensionale, auf dem stereoskopischen Prinzip basierende, Erkennung der Objektebene 3 erfolgen.

Das gezeigte Umfelderkennungssystem 1 hat den Vorteil, dass es eine zuverlässige dreidimensionale Erkennung des Fahrzeugumfeldes ermöglicht, unter Verwendung von lediglich einem Bildaufnehmer bzw. lediglich einer Digitalkamera.

Erfindungsgemäß können anstelle von Prismen, oder auch zusätzlich zu Prismen, auch Spiegel, Linsen oder Lichtleitersysteme vorgesehen werden.

Denkbar ist ferner, dass die beiden Aufnahmeabschnitte 33 und 35 des Bildaufnehmers 9 nicht nebeneinander, sondern wenigstens teilweise übereinander liegen. Dies hat den Vorteil, dass die räumlichen Ausdehnungen des Bildaufnehmers insgesamt kleiner gestaltet werden können.

Insgesamt kann das erfindungsgemäße Umfelderkennungssystem sehr klein und kompakt ausfallen. Es eignet sich daher insbesondere zur Anordnung an bzw. in Kraftfahrzeugen.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Umfelderkennungssystem (1) zur dreidimensionalen Erkennung des Umfeldes eines Fahrzeuges, mit einem eine Objektebene (3) aufzeichnenden Bildaufnehmer (9), mit einem zwischen dem Bildaufnehmer (9) und der Objektebene (3) angeordneten optischen System (5), wobei der Bildaufnehmer (9) über das optische System die Objektebene von wenigstens zwei unterschiedlichen Positionen (21, 23) aus erfasst, und mit einem die erfassten Bilddaten verabreitenden und auswertenden Computersystem (11).

2. Umfelderkennungssystem (1) nach Anspruch 1, **dadurch gekennzeichnet, dass** der Bildaufnehmer (9) zwei nebeneinander angeordnete Aufnahmeabschnitte (33, 35) aufweist, wobei der eine Aufnahmeabschnitt (33) zur Erfassung der Objektebene (3) aus der einen Position (21) und der andere Aufnahmeabschnitt (35) zur Erfassung der Objektebene (3) aus der anderen Position (23) dient.

3. Umfelderkennungssystem (1) nach Anspruch 1, **dadurch gekennzeichnet, dass** der Bildaufnehmer (9) zwei wenigstens teilweise übereinander liegende Aufnahmeabschnitte aufweist, wobei der eine Aufnahmeabschnitt zur Erfassung der Objektebene aus der einen Position und der andere Aufnahmeabschnitt zur Erfassung der Objektebene aus der anderen Position dient.

4. Umfelderkennungssystem (1) nach Anspruch 1, 2 oder 3 **dadurch gekennzeichnet, dass** eine digitale Kamera (7) den Bildaufnehmer (9) aufweist.

5. Umfelderkennungssystem (1) nach einem der vorhergehenden Ansprüche, **dadurch gekennzeichnet, dass** das optische System (3) als Linsen-, Prismen-, Spiegel- und/oder Lichtleitersystem ausgebildet ist.
